# EUROPEAN PATENT APPLICATION

(11) **EP 1 742 100 A1**
(43) Date of publication of application: **10.01.2007**
(21) Application number: 05026852.3
(22) Date of filing: 08.12.2005
(51) Int. Cl.: G02F 1/1334

(54) **Multifocal lens and method for manufacturing the same**

(30) Priority: 06.07.2005 KR 2005060661
(71) Applicant: LG Electronics, Inc., 151-721 seoul (KR)
(72) Inventor: Lee, Jung Hoon, Sewon-neut maeul 105-707, Cheongju-si Chungcheongbuk-do 361-270 (KR)
(74) Representative: von Hellfeld, Axel

(57) **Abstract**

The present invention discloses a multifocal lens and manufacturing method thereof.

The multifocal lens according to a preferable embodiment of the present invention comprises a plurality of holographic polymer dispersed liquid crystals; and a power supply unit for supplying electrical power to the holographic polymer dispersed liquid crystals, wherein the holographic polymer dispersed liquid crystals adjust the focal point of light passing through them.

## Description

### BACKGROUND OF THE INVENTION

### Field of the Invention

The present invention relates to a multifocal lens and a manufacturing method thereof, particularly, a multifocal lens that can easily adjust its focal length by using HPDLC, and a manufacturing method thereof.

### Description of the Related Art

Optical information storage medium is a medium that can optically record and reproduce information, and Compact Disc (CD), Digital Versatile Disc (DVD), and Bluray Disc (BD) are its representative examples.

In these mediums, information is stored in a circular disc, and the information stored in the disc is read by difference of reflectivity, change of phase, or polarization of light at the time of reflection through irradiating laser beam on the disc.

An optical recorder or/and reproducer is used to record information in the optical information storage medium or reproduce the information stored in the medium. An optical pickup device provided for the optical recorder or/and reproducer is an essential device for recording and reproducing information.

The optical pickup device generally comprises a light source, an objective lens for focusing a beam from the light source on a recording surface of the optical information storage device, and a light-receiving optical system for detecting information signal and error signal from the beam which is reflected at the surface of the optical information medium and passes through the objective lens.

Recently, there have been needs to use all optical information storage mediums having different wavelength, such as CD, DVD, BD, etc. in a single optical recorder and/or reproducer.

To use all different optical information storage mediums that are recorded and reproduced at different wavelengths, different wavelength of light beams corresponding to the optical information storage mediums should be able to catch focus at their respective focal points in the single optical pickup device.

To do so, conventional optical pickup devices generally have same number of lenses for recording and reproducing as the number of the optical information storage mediums. Here, each lens is made to be able to record/reproduce information in CD, DVD, or BD.

In case of making the optical pickup device by using a plurality of lenses, the device should also have other necessary devices for each lens, and thus the overall structure of the optical pickup device is complicated to increase the manufacturing cost.

Therefore, it has been desirable to develop a device that information can be recorded and reproduced in different types of optical information storage devices with a single lens.

### SUMMARY OF THE INVENTION

An object of the present invention is to provide a multifocal lens which can easily adjust its focal point, in which lens hologram is printed onto polymer dispersed liquid crystal.

Another object of the present invention is to provide a multifocal lens which is manufactured by using holographic polymer dispersed liquid crystal and can record/reproduce information in different types of optical information storage mediums.

Still, another object of the present invention is to provide a mutifocal lens which can simplify the structure of an optical pickup device and reduce the manufacturing cost, and manufacturing method thereof.

A multifocal lens according to a preferable embodiment of the present invention comprises a plurality of holographic polymer dispersed liquid crystals; and a power supply unit for supplying electrical power to the holographic polymer dispersed liquid crystals, wherein the holographic polymer dispersed liquid crystals adjust the focal point of light passing through them.

A method for manufacturing a multifocal lens according to the present invention comprises, (a) printing pre-designed holograms on a plurality of hologram sheets; (b) transferring the holograms to polymer dispersed liquid crystals, thereby producing a plurality of holographic polymer dispersed liquid crystals; and (c) uniformly disposing the plurality of holographic polymer dispersed liquid crystals.

The multifocal lens of the present invention can easily adjust the focal point by manufacturing the lens that hologram is printed onto polymer dispersed liquid crystals.

### BRIEF DESCRIPTION OF THE DRAWINGS

The present invention will be more clearly understood from the detailed description in conjunction with the following drawings;
FIG. 1 illustrates the schematic structure of the multifocal lens according to a preferable embodiment of the present invention;
FIG. 2A and FIG. 2B are a cross-sectional view and a perspective view of the HPDLC of FIG. 1, respectively;
FIG. 3A and FIG. 3B are a cross-sectional view and a perspective view of the HPDLC of FIG. 2, respectively, illustrating the state of HPDLC when electrical power is not applied thereto;
FIG. 4A and FIG. 4B are a cross-sectional view and a perspective view of the HPDLC of FIG. 2, respectively, illustrating the state of HPDLC when electrical power is applied thereto;
FIG. 5 illustrates a method for transferring holograms to HPDLC by using Computer Generated Hologram (hereinafter, referred to as "CGH"); and
FIG. 6 illustrates the operating principle of the multifocal lens of FIG. 1.

### DETAILED DESCRIPTON OF THE INVENTION

Hereinafter, the embodiments of the present invention will be described in detail with reference to those accompanying drawings.

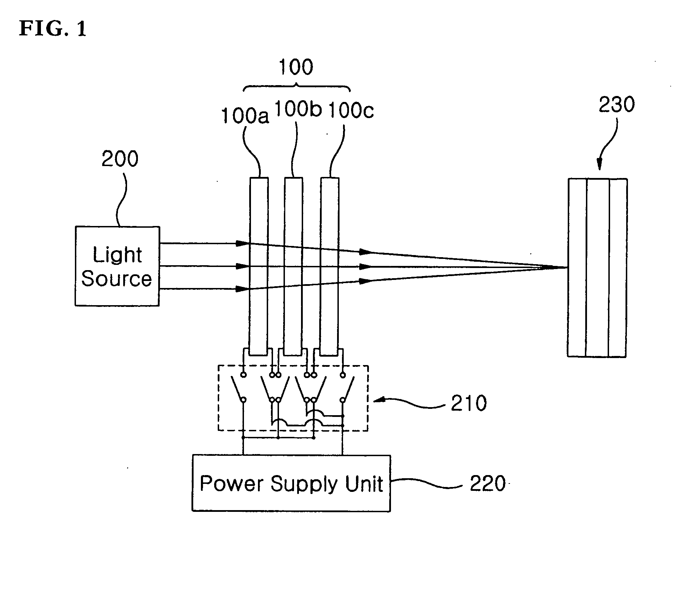

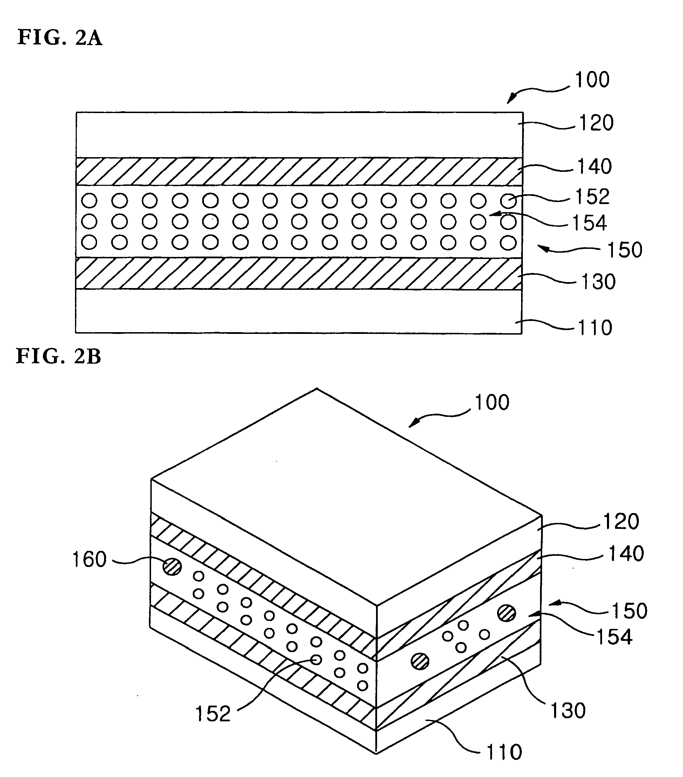

FIG. 1 illustrates the schematic structure of the multifocal lens according to a preferable embodiment of the present invention. FIG. 2A and FIG. 2B are a cross-sectional view and a perspective view of the HPDLC of FIG. 1, respectively.

Referring to FIG. 1, a multifocal lens of the present invention comprises a light source 200, a plurality of holographic polymer dispersed liquid crystals 100, a power supply unit 220, and a plurality of switches 210.

The power supply unit 220 supplies electrical power to the plurality of HPDLC 100.

The power supply unit 220 may be controlled not to supply electrical power to a certain HPDLC 100 by switching the plurality of switches 210.

A light emitted from the light source 200 is transformed to the light which may be focused at a certain focal point distance while passing through the plurality of HPDLC 100, and so the focus is on a certain optical information storage medium 230 among multiple optical information storage mediums.

The light source is configured to generate a light with suitable wavelength according to characteristic of each optical information storage medium.

HPDLC 100 is necessary as many as the number of optical information storage mediums that are used in the optical pickup device. In order to record/reproduce information in CD, DVD and BD with a single optical pickup device, 3 pieces of HPDLC 100a, 100b and 100c, each of which corresponds to each optical information storage medium, are needed

For example, HPDLC 100a with 0.45 NA (numerical aperture), HPDLC 100b with 0.6 NA, and HPDLC 100c with 0.85 NA should be provided to record/reproduce CD, DVD and BD, respectively.

Hereinafter, the operating principle of the mutifocal lens using HPDLC 100 will be described.

First, the structure and features of the HPDLC 100 are described.

Referring to FIG. 2a and 2b, the HPDLC 100 comprises an upper glass substrate 120, a lower glass substrate 110, transparent electrodes 130 and 140, a holographic polymer dispersed liquid crystal 150, and a plurality of beads 160.

The upper glass substrate 120 and the lower glass substrate 110 are oppositely disposed with a predetermined distance.

The transparent electrodes 130 and 140 are disposed on each inner surface of the substrates 110 and 120. The HPDLC layer 150 is disposed between the electrodes 130 and 140.

HPDLC layer 150 is made up of polymer 154 and liquid crystals 152.

HPDLC 100 maintains the state that a light emitted from the light source 200 passes through the inner side including HPDLC layer between the upper glass substrate 120 and the lower glass substrate 110. However, depending on applying a voltage, the liquid crystals 152 close to the polymer 154 of HPDLC layer are arranged in a specific pattern, and thus light diffraction is occurred by difference of refraction rates between the polymer 154 and the liquid crystal 152.

A plurality of beads are disposed at two sides of the HPDLC layer 150 between the electrodes 130 and 140. There is no specific limit to the number of beads 160. It is, however, preferable that at least two beads 160 are disposed at each of the two sides. The beads 160 play a role to maintain the thickness of HPDLC layer 150.

The light transmitting principle of HPDLC 100 is described in detail hereinafter.

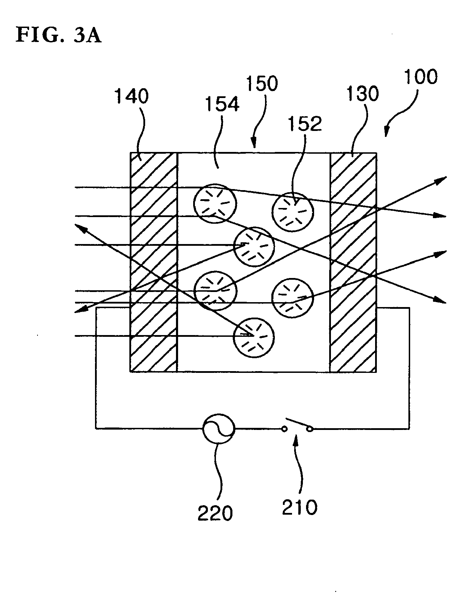

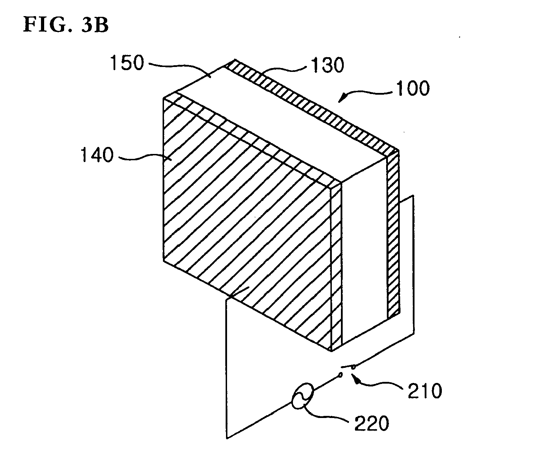

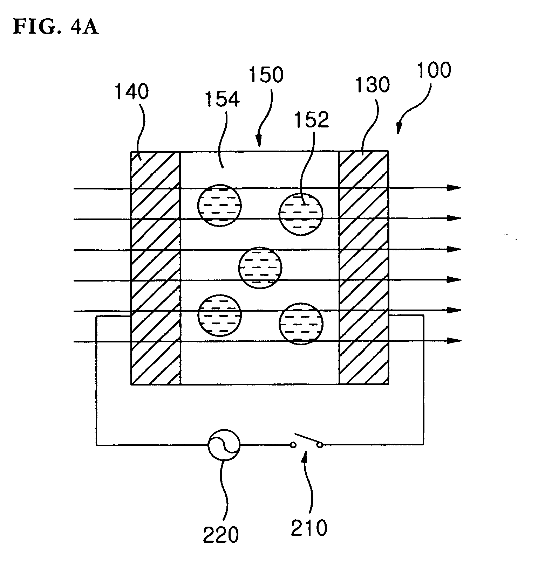

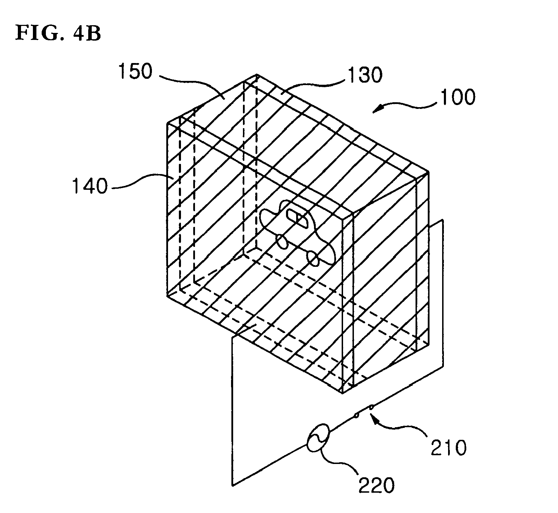

FIG. 3A and FIG. 3B are a cross-sectional view and a perspective view, respectively, of the HPDLC of FIG. 2, illustrating the state of HPDLC when electrical power is not applied thereto. FIG. 4A and FIG. 4B are a cross-sectional view and a perspective view, respectively, of the HPDLC of FIG. 2, illustrating the state of the HPDLC when electrical power is applied thereto.

In case that electrical power is not applied to the HPDLC 100, the liquid crystals 152 are irregularly arranged as shown in FIG. 3A.

Thus, when a light emitted from the light source 200 is incident on the HPDLC 100, light diffraction is occurred due to difference of refraction rates of the liquid crystals 152 and the polymer 154, as shown in FIG. 3B.

And, in case that electrical power is applied to the HPDLC 100, the liquid crystals of the HPDLC layer 150 are regularly arranged in a specific pattern, as shown in FIG. 4A.

Thus, when the light generated from the light source 200 is incident on the HPDLC 100, the light may transmit the regularly arranged liquid crystals 152 without diffraction because the refraction rates of the liquid crystal 152 and the polymer 154 become almost identical.

When the light incident on the HPDLC 100 transmits through it, the HPDLC 100 becomes transparent enough to see the pattern of the opposite side of the HPDLC 100, as shown in FIG. 4B. The light transmittance is 98% or more.

In order for the above described HPDLC 100 to function as optical lens, a specific hologram pattern is printed thereon.

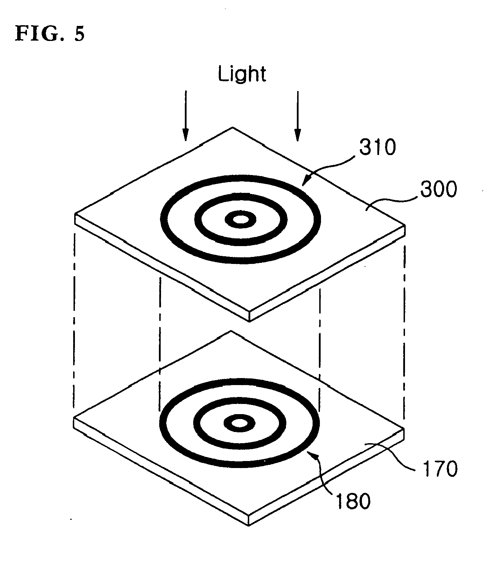

FIG. 5 illustrates a method for transferring hologram to HPDLC by using CGH.

CGH 310 may be used for the hologram.

CGH 310 is hologram produced by computer and recorded by calculating complex amplitude distribution of a hologram from the amplitude distribution of an object.

CGH 310 may be produced in a ring or fan shape according to light incidence path. In this embodiment, spherical wave shaped CGH is printed on the light propagation path.

CGH 310 is designed to transform the light generated from the light source 200 to the light having a focal point that can record /reproduce information in the optical information recording medium 230.

Hereinafter, the steps of printing hologram 180 to the HPDLC layer 150 by using CGH 310 will be described.

First, an optical mask which is a prototype of hologram is made by electron beam lithography.

Next, with the optical mask, an optically transparent phase hologram is made by photolithography.

Through the above steps, pre-designed CGH 310 is printed to a hologram sheet 300.

CGH 310 is printed to generate light beams necessary for each optical information recording medium 230.

Next, as shown in FIG. 5, the hologram sheet 300 with printed CGH 310 is disposed on the HPDLC layer 150, and laser beams are irradiated from the hologram sheet 300.

The polymer of the HPDLC layer 150, located at the area where the CGH 310 is not printed, is cured with the irradiated light.

On the other hand, the liquid crystals 152, which are pushed as the polymer of the HPDLC layer is cured, are located at the area where the CGH is printed because the liquid crystals 152 have some degree of fluidity.

In this way, the CGH pattern 310 formed in the hologram sheet 300 may be identically printed to the HPDLC layer 150.

The HPDLC 100 produced by the above described method serves as a lens to record/reproduce information in CD, DVD and BD in the optical pickup device.

However, it is obvious that the method of printing CGH 310 to HPDLC 150 is not limited to the above described method

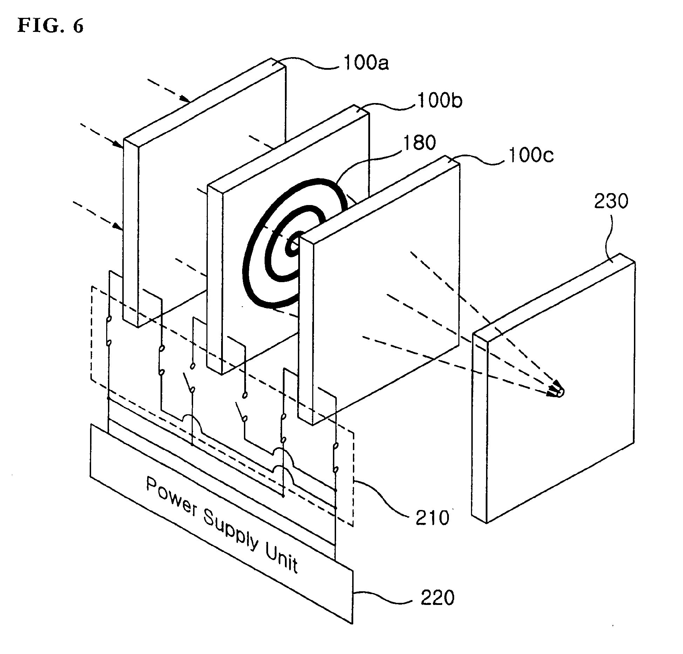

FIG. 6 illustrates the operating principle of the multifocal lens of FIG. 1.

Referring to FIG. 6, when an optical pickup device records/reproduces information in DVD 230, switches 210 are controlled not to supply electrical power to a second HPDLC 100b corresponding to the lens for the DVD 230, and to supply electrical power to a first HPDLC 100a and a third HPDLC 100c.

If the electrical power is supplied, electrical field is applied to the first HPDLC 100a and the third HPDLC 100c, which become transparent to pass through the incident light.

At that moment, a light incident on the second HPDLC 100b is transformed to the light which can be focused at the focal point suitable for recording and/or reproducing to DVD. The hologram printed to the HPDLC 100b serves as a plane lens.

That is, when the light from the light source 200 is incident on the HPDLC 100b after passing through the first HPDLC 100a, the light is transformed to have a focal length for DVD 230 by the hologram printed to the second HPDLC 100b. The transformed light passes through the third HPDLC 100c as it is.

The light is focused at the focal point which is suitable to record/reproduce information in DVD 230, as it passes through the plurality of HPDLC 100a, 100b and 100c.

As described above, it is an advantage of the present invention that the multifocal lens of the present invention, produced by printing hologram to a polymer dispersed liquid crystal, may easily adjust a focal length.

It is another advantage of the present invention that the multifocal lens of the prensent invention may record/reproduce information in different types of optical information storage mediums.

It is still another advantage of the present invention that the structure of the optical pickup device may be simplified, and the manufacturing cost may be reduced.

## Claims

1. A multifocal lens comprising:
a plurality of holographic polymer dispersed liquid crystals; and
a power supply unit for supplying electrical power to the holographic polymer dispersed liquid crystals,
wherein the holographic polymer dispersed liquid crystals adjust the focal point of a light passing through them.

2. The multifocal lens of claim 1, wherein the holographic polymer dispersed liquid crystals are formed by printing hologram to polymer dispersed liquid crystal, and wherein the hologram is computer generated hologram (CGH).

3. The multifocal lens of claim 1, wherein when the power supply unit supplies electrical power to holographic polymer dispersed liquid crystals except one of the holographic polymer dispersed liquid crystals, the light has a focal length corresponding to the one

4. A method of manufacturing a multifocal lens comprising:
(a) printing pre-designed holograms to a plurality of hologram sheets;
(b) transferring the holograms to polymer dispersed liquid crystals, thereby producing a plurality of holographic polymer dispersed liquid crystals; and
(c) disposing the plurality of holographic polymer dispersed liquid crystals.

5. The method of manufacturing a multifocal lens according to claim 4, wherein the hologram is computer generated hologram (CGH).

6. The method of claim 4, wherein the step (b) includes:
(b-1) disposing the hologram sheets over the polymer dispersed liquid crystals; and
(b-2) irradiating light to the hologram sheets so that holograms printed to the hologram sheets are transferred to the polymer dispersed liquid crystals.

7. The method of claim 6, wherein the step (b-2) is **characterized in**:
curing polymers included in the polymer dispersed liquid crystal by using the irradiated light.
